# EUROPEAN PATENT SPECIFICATION

(11) **EP 2 602 593 B1**
(45) Date of publication and mention of the grant of the patent: **05.07.2017**
(21) Application number: 11192010.4
(22) Date of filing: 05.12.2011
(51) Int. Cl.: G01D 5/14, G01D 5/245, G01D 5/244, G01P 3/487

(54) **Sensor for measuring a periodic signal comprising several harmonics**
Sensor zum Messen eines periodischen Signals mit mehreren Harmonien
Capteur pour mesurer un signal périodique comprenant plusieurs harmoniques

(43) Date of publication of application: 12.06.2013
(73) Proprietor: Sensitec GmbH, 35633 Lahnau (DE)
(72) Inventor: Paul, Johannes, 35633 Lahnau (DE); Marien, Jan, 35633 Lahnau (DE); Peterschmitt, Cyril, 74000 Annecy (FR); Duret, Christophe, 74600 Quintal (FR)
(74) Representative: Spachmann, Holger

(56) References cited:
- EP-B1- 0 235 750
- DE-A1- 10 020 978
- DE-A1- 10 041 087
- FR-A1- 2 792 403
- FR-A1- 2 869 980
- US-A- 4 818 939

## Description

The invention relates to a sensor for measuring a periodic signal comprising several harmonics wherein the first harmonic has a λ spatial period. The invention relates also to a use of such a sensor to measure either angular or linear data of a member delivering a magnetic sine shape signal or to measure periodic mechanical deformations of a structural body. The invention relates also to a set of two sensors and a group of said sets.

The invention applies in particular to the field of measuring magnetic periodic signal, for example sine shape signal, notably to determine angular data, such as the position or the speed of the rotating member of a bearing in relation to the stationary member of said bearing.

In order to do so, it is known from the document FR-2 792 403 to use an encoder capable of transmitting a magnetic sine shape signal and a sensor including a plurality of sensing elements which are linearly equally distributed, said sensing elements each being capable of delivering a signal which is representative of the signal transmitted by the encoder.

The sensing elements can be arranged in a net of sensing elements connected in series and/or in parallel. The net forms a group of sensing elements if there are exactly two connectors available to contact the group to an electrical circuit, V_{G} defining the voltage drop over the group of sensing elements.

This document further anticipates combining the delivered signals in order to form two outputs in quadrature and of the same amplitude, which are representative of the angular position of the rotating member in relation to the stationary member.

The invention also applies to the measurement of a mechanical periodic signal, such as deformation sine shape one as described, for example, in the document FR-2 869 980, in which sine shape outputs in quadrature and of the same amplitude are formed by combining signals delivered by sensing areas.

Notably in these two types of application, the periodic signal is in fact pseudo-sinusoidal by comprising a first harmonic and several other harmonics which are multiple of said first harmonic.

For example, if one approaches the encoder, the signal becomes more "square" and, if it moves away, the signal takes a more "triangular" shape. These phenomena result in the appearance of harmonics within the signal. In the same way, the deformation periodic signal comprises also harmonics.

The problem is that the algorithms or devices that use these signals to determine the angular or the deformation data have degraded performance in the presence of harmonics. For example, we can obtain an error of period, of phase or a modulation of amplitude within the outputs. To try to limit this problem, it is thus necessary to complicate the algorithms with more calculations and more calibration parameters.

EP 0235750 B1 and US 4 818 939 A reveal a sensor for measuring a periodic signal comprising several harmonics wherein a Wheatstone bridge consists of four magnetoresistive resistors. Each leg of the Wheatstone bridge comprise two resistors being spaced from each other by λ/2 of an alternating magnetic dipole distance and the resistors of both legs are being spaced from each other by λ/6 for reducing higher harmonics of the periodic signal.

DE 100 41 087 A describes a magnetoresistive sensor comprising a Wheatstone bridge with two legs, whereby a spatial distance between both legs of the Wheatstone bridge is different than λ/2.

DE 100 20 978 A1 teaches a magnetoresistive sensor arrangement comprising two sensors, whereby both sensors are spatially displaced by λ/X, X being an integer >1.

The purpose of the invention is notably to solve the above mentioned problem by proposing a sensor for measuring a periodic signal wherein harmonics are filtered.

To that end, and according to a first aspect, the invention relates to a sensor for measuring a periodic signal comprising several harmonics wherein the first harmonic has a λ spatial period, said sensor comprising an electrical circuit comprising at least one Wheatstone bridge, said Wheatstone bridge comprising at least four resistive groups, at least one of said groups comprising at least one set of p resistive elements connected in series and having a geometrical barycenter spaced by λ/pn + i λ (i being an integer) from each other in order to filter at least harmonics n [2n] of the signal.

According to further aspects, the invention relates to a use of such a sensor to measure either angular or linear data of a rotating or moving member delivering a magnetic sine shape signal or to measure periodic mechanical deformations of a structural body.

According to a further aspect, the invention relates to a set of two sensors shifted by λ/4 in order to deliver a sine shape and a cosine shape signal in parallel.

According to a further aspect, the invention relates to a group of said sets shifted by kλ (k being an integer) in order to deliver more than one independent sine shape and/or cosine shape signals for averaging over more than one periodic length.

Other objects and advantages will become apparent in the following description made with reference to the appended figures, in which:
- figures 1 represent schematically respectively one variant of an embodiment for the arrangement of the resistive elements of a sensor according to the invention;
- figures 2 represent schematically other embodiments for the arrangement of the resistive elements of a sensor according to the invention;
- figure 3 represents resistive groups formed in a single strip of resistive material;
- figures 4 represent schematically respectively one embodiment for a set of two sensors according to the invention;
- figure 5 represents schematically an embodiment for a group of sets according to the invention.

The invention relates to a sensor for measuring a periodic signal comprising several harmonics wherein the first harmonic has a λ spatial period. The n^{th} harmonic has a λ/n spatial period and we use below the terminology harmonics n [2n] (i.e. n modulo 2n) for n^{th}, 3n^{th}, 5n^{th}, ... harmonics family. In particular, the signal can be sinusoidal by nature and at least a portion of which can be correctly approximated by a sine curve.

To do so, the sensor includes a plurality of resistive elements 1, each of which being capable of delivering a voltage which is representative of the signal being detected. Accordingly, each resistive group is capable of delivering a voltage V_{G} which is representative of the signal being detected.

According to two specific applications, the periodic signal is an angular position signal for a rotating member in relation to a stationary member, or a periodic deformation signal for a structural body. The invention could also be applied to linear encoders delivering periodic signal.

In the first application, anticipated in particular in the document FR-2 792 403, the signal can be transmitted by a multipole magnetic encoder with pole length of Lp (λ = 2Lp). Alternatively, the periodic signal could be delivered by the modulation of a constant biasing magnetic field with soft magnetic gear teeth.

As a matter of fact, by interconnecting this type of encoder with the rotating member, the transmitted signal is of a sine shape nature and varies according to the angular position of said encoder in relation to the sensor. In order to measure the magnetic pseudo-sinusoidal signal, the resistive elements 1 can include, in particular, Hall effect sensors or magnetoresistors (AMR, GMR or TMR).

In the second application, anticipated in particular by the document FR-2 869 980, the signal is induced by the periodic deformations of the structural body, and the resistive elements 1 are strain gauges arranged on said body. In particular, the strain gauges can be of a resistive or piezoresistive type.

However, the invention is not limited to these two specific applications, and can be applied to another type of periodic signal, e.g. whether it be of a mechanical, optical, thermal or acoustic nature, the nature of the resistive elements 1 then being chosen accordingly, in order to be capable of sensing the signal used.

In relation with the figures, the sensor comprises an electrical circuit comprising at least one Wheatstone bridge, said Wheatstone bridge comprising at least four resistive groups, at least one of said groups comprising at least one set of p resistive elements 1 connected in series and having a geometrical barycentre spaced by λ/pn + iλ (i being an integer) from each other in order to filter at least harmonics n [2n] of the signal.

In particular, each of the resistive elements 1 is small compared to λ and even to λ/n. Preferentially, the barycentres of the two resistive groups of each branch of the Wheatstone bridge are shifted by λ/2. This give maximum signal amplitude and all even higher harmonics of the periodic signal are filtered automatically.

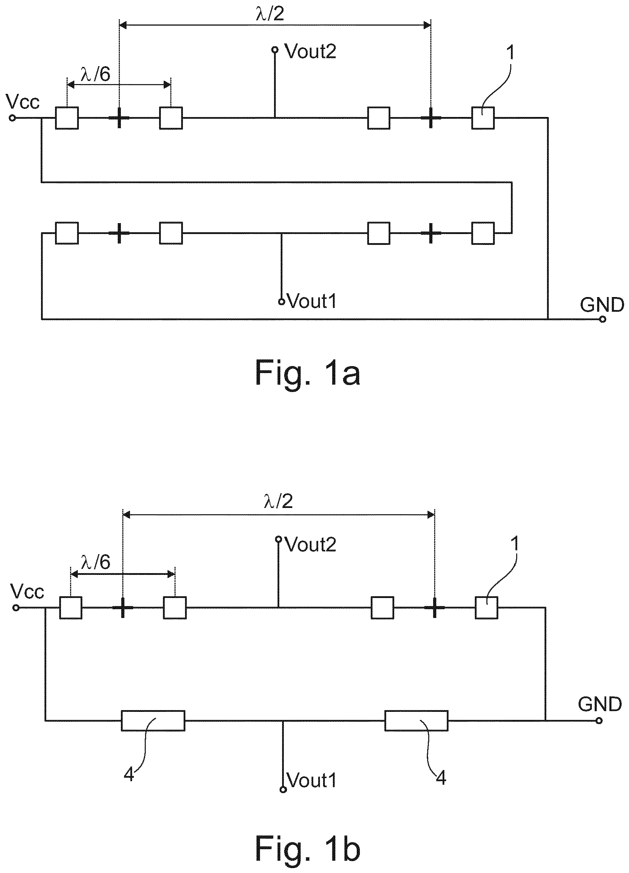

In relation with figures 1a-1c, we describe below the spatial filtering of harmonics 3 [6] (n = 3) of a sine shape signal with at least one group of two resistive elements 1 spaced by λ/2.

According to figure 1a, the Wheatstone bridge circuit has a full configuration with two groups of two resistive elements 1 spaced by λ/2, said elements being spaced by λ/6 for the spatial filtering of harmonics 3 [6] of the sine shape signal. In this variant, the second branch of the Wheatstone bridge further comprises two groups of two resistive elements 1 spaced by λ/2, said elements being spaced by λ/6 to further filter harmonics 3 [6] on the output of this branch.

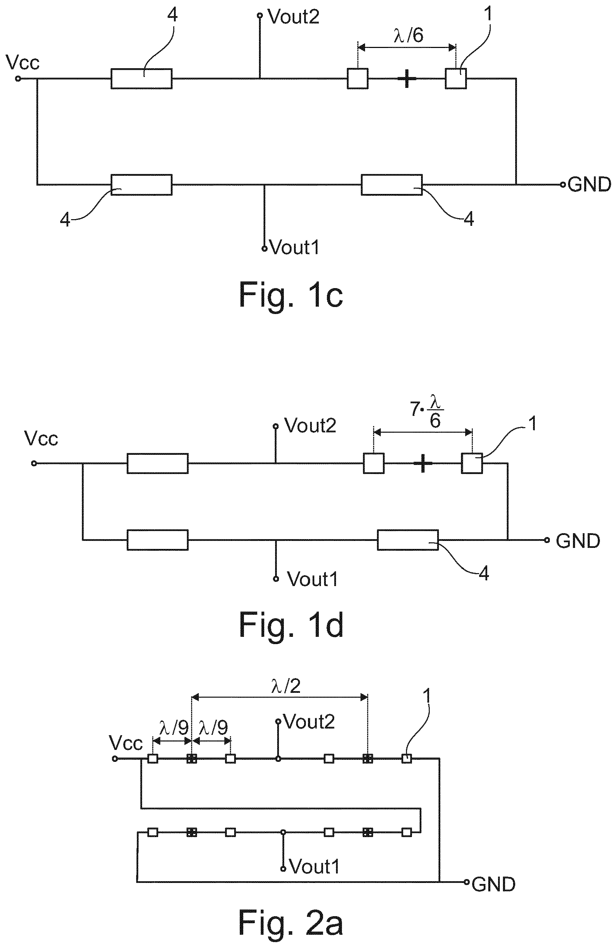

According to figure 1b, the second branch of the Wheatstone bridge comprises two non sensitive resistances 4 to obtain a Wheatstone bridge circuit having a half bridge configuration. According to figure 1c, the Wheatstone bridge circuit has a quarter bridge configuration, i.e. the same second branch as figure 1 b and one group of two resistive element 1 with a non sensitive resistance 4 on the first branch.

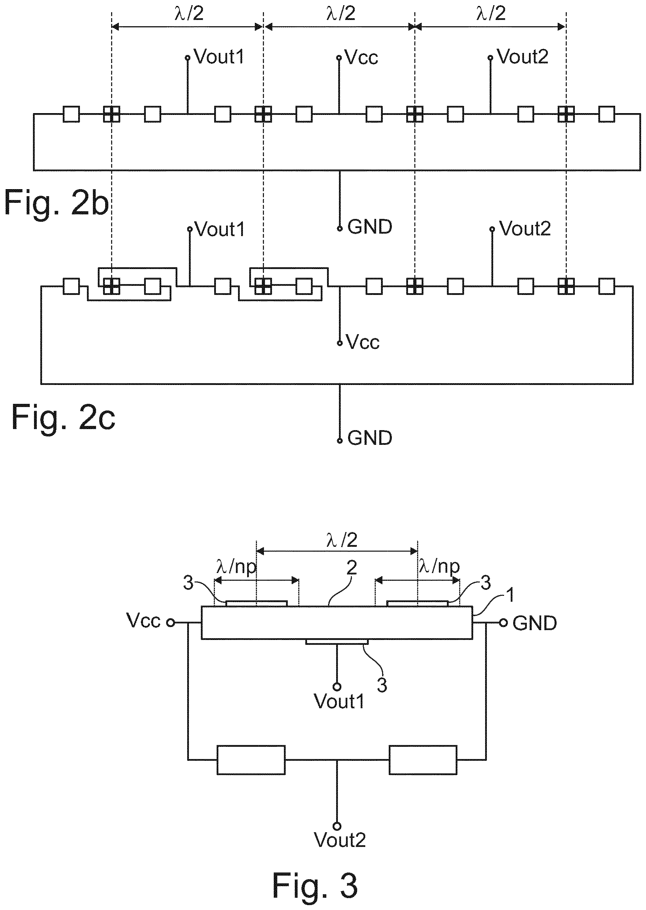

On figure 2, two groups of three resistive elements 1 are spaced by λ/2, said elements being spaced by λ/9 for the spatial filtering of harmonics 3 [6] of the sine shape signal.

Figures 1a-1c and 2 display a condensed configuration wherein the resistive elements 1 of each group are in the most condensed spatial distribution. However, the filtering effect remains the same for non condensed configurations if one or more resistive elements 1 are spatially moved by iλ, i being an integer.

For example, figure 1d shows an embodiment wherein the two resistive elements 1 of a group are shifted by λ/6 + λ..., i.e 7λ/6, this configuration will deliver the same filtering effect than the one of figure 1 c. Other examples are shown on figure 2b and 2c wherein not a single resistive element 1 is shifted by λ but the complete branch of the bridge circuit.

The sequence of the resistive elements 1 in series within a group is also of no importance as regards the filtering effect. For example, figures 2b and 2c show two equivalent embodiments of the invention. On figure 2b, the first resistive element 1 is electrically connected with its neighbor element 1 spaced by λ/pn which is electrically connected to the second next neighbor element 1. On figure 2c, the first resistive element 1 is electrically connected with its second next neighbor element 1 spaced by 2λ/pn which is connected to the next neighbor element 1 spaced by λ/pn from said first element.

The table below contains the corresponding phase differences of the sine shape signal seen by both resistive elements 1, for the different harmonics:

| Harmonics number | Phase differences | | | | | | | |
|---|---|---|---|---|---|---|---|---|
| | λ/2 | λ/3 | λ/4 | λ/5 | λ/6 | λ/7 | λ/8 | ··· |
| 1 | π | 2π/3 | π/2 | 2π/5 | π/3 | 2π/7 | π/4 | |
| 2 | 0 | 4π/3 | π | 4π/5 | 2π/3 | 4π/7 | π/2 | |
| 3 | π | 0 | 3π/2 | 6π/5 | π | 6π/7 | 3π/4 | |
| 4 | 0 | 2π/3 | 0 | 8π/5 | 4π/3 | 8π/7 | π | |
| 5 | π | 4π/3 | π/2 | 0 | 5π/3 | 10π/7 | 5π/4 | |
| 6 | 0 | 0 | π | 2π/5 | 0 | 12π/7 | 6π/4 | |
| 7 | π | 2π/3 | 3π/2 | 4π/5 | π/3 | 0 | 7π/4 | |
| 8 | 0 | 4π/3 | 0 | 6π/5 | 2π/3 | 2π/7 | 0 | |
| 9 | π | 0 | π/2 | 8π/5 | π | 4π/7 | π/4 | |
| 10 | 0 | 2π/3 | π | 0 | 4π/3 | 6π/7 | π/2 | |
| ··· | | | | | | | | |

As soon as the phase difference is π, the corresponding harmonic is removed by the addition of both voltages across resistive elements 1. Consequently, by spacing the p resistive elements 1 by λ/pn, the harmonics n [2n] are filtered.

In the embodiment of figure 1a, harmonics 3, 9, 15 ... of Vout1 and Vout2, as well as of the bridge output Vout1-Vout2, are thus filtered by using, for each group, two λ/6 spaced resistive elements 1.

In the embodiments shown, the repartition of the resistive elements 1 within the groups are identical but, notably as regards the amplitude of the voltage V_{G} and/or the combination of said voltage, the groups can present a different repartition and/or number of resistive elements 1.

In other embodiments, at least one of the resistive groups comprises at least two sets of p resistive elements 1 connected in series. More particularly, two sets of p resistive elements 1 can be shifted by λ/2m + jλ (j being an integer) from each other, m being different from n, in order to further filter harmonics m [2m] of the signal.

In relation with figure 3, at least one of the resistive groups is formed in a strip 2 of resistive material. In particular, some sensors, like thick film piezoresistive sensing elements used to measure strain, are screen printed on a substrate.

Several electrical contacts 3 used to connect the resistive elements 1 are disposed within the strip 2, notably by screen printing, in order to delimit the resistive elements 1 between two of them.

This process allows to easily make sensors with different shapes thanks to a dedicated set of screens. In the embodiment shown, two of the resistive groups of a Wheatstone bridge are formed in a single strip 2 of resistive material.

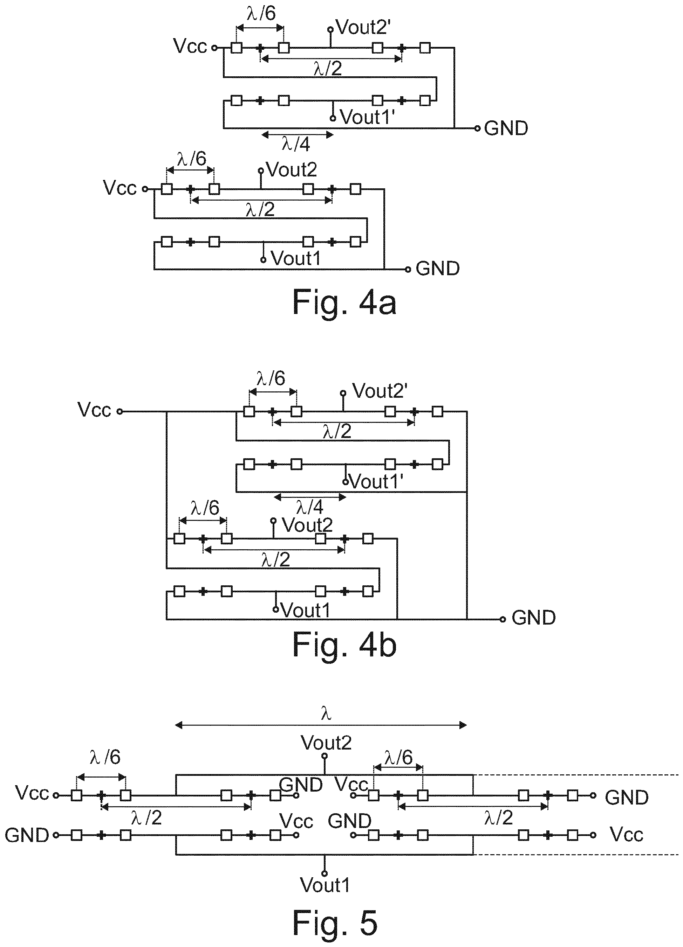

Figure 4a shows a set of two sensors according to figure 1a, said two sensors being shifted by λ/4 in order to deliver a sine shape and a cosine shape signal in parallel. On Figure 4b, both sensors are connected to the same power supply connector Vcc and to the same ground connector GND.

Figure5 shows a group of two sets shifted by λ in order to deliver more than one independent sine shape and/or cosine shape signals for averaging more than one periodic length. In variant, the two sets can be shifted by λ + kλ, k being an integer.

## Claims

1. Sensor for measuring a periodic signal comprising several harmonics wherein the first harmonic has a λ spatial period, said sensor comprising an electrical circuit comprising at least one Wheatstone bridge, said Wheatstone bridge comprising at least four resistive groups, **characterized by** at least one of said groups comprising at least one set of p resistive elements (1) connected in series and having a geometrical barycentre spaced by λ /pn + i λ, i being an integer, from each other in order to filter at least harmonics n of the signal.

2. Sensor according to claim 1, **characterized by** at least one of the resistive groups comprising at least two sets of p resistive elements (1) connected in series.

3. Sensor according to claim 2, **characterized by** two sets of p resistive elements (1) shifted by λ/2m + jλ, j being an integer, from each other, m being different from n, in order to further filter harmonics m of the signal.

4. Sensor according to any of claims 1 to 3, **characterized by** the Wheatstone bridge circuit having a quarter bridge configuration,

5. Sensor according to any of claims 1 to 3, **characterized by** the Wheatstone bridge circuit having a half bridge configuration.

6. Sensor according to any of claims 1 to 3, **characterized by** the Wheatstone bridge circuit having a full bridge configuration.

7. Sensor according to any of claims 1 to 6, **characterized by** at least one of the resistive groups formed in a strip (2) of resistive material, several electrical contacts (3) being disposed within said strip in order to delimit the resistive elements (1) between two of them.

8. Sensor according to claim 7, **characterized by** two of the resistive groups formed in a single strip (2) of resistive material.

9. Sensor according to any of claims 1 to 8, **characterized by** the resistive elements (1) including Hall effect sensors, magnetoresistors, resistive or piezoresistive strain gauges.

10. Use of a sensor according to any of claims 1 to 9 to measure angular data of a rotating member delivering a magnetic sine shape signal.

11. Use of a sensor according to any of claims 1 to 9 to measure linear data of a moving member delivering a magnetic sine shape signal.

12. Use of a sensor according to any of claims 1 to 9 to measure periodic mechanical deformations of a structural body.

13. Set of two sensors according to any of claims 1 to 9, **characterized by** the two sensors shifted by λ/4 in order to deliver a sine shape and a cosine shape signal in parallel.

14. Set according to claim 13, **characterized by** both sensors being connected to the same power supply connector and to the same ground connector.

15. Group of sets according to claim 13 or 14, **characterized by** the sets shifted by k λ (k being an integer) in order to deliver more than one independent sine shape and/or cosine shape signals for averaging over more than one periodic length.

## Patentansprüche

1. Sensor zur Messung eines periodischen, mehrere Harmonische umfassenden Signals, wobei die erste Harmonische eine örtliche Periodenlänge von λ aufweist, wobei der Sensor einen Schaltkreis umfasst, der zumindest eine Wheatstone-Brücke umfasst, wobei die Wheatstone-Brücke zumindest vier Widerstandsgruppen umfasst, **dadurch gekennzeichnet,**
**dass** zumindest eine der Gruppen zumindest einen Satz von p Widerstandselementen (1) umfasst, die in Reihe geschaltet sind und ein geometrisches Baryzentrum aufweisen, welche mit λ/pn + iλ, (wobei i eine ganze Zahl ist) voneinander beabstandet sind, um zumindest die Harmonischen n aus dem Signal zu filtern.

2. Sensor nach Anspruch 1,
**dadurch gekennzeichnet,**
**dass** zumindest eine der Widerstandsgruppen zumindest zwei Sätze von p in Reihe geschalteten Widerstandselementen (1) enthält.

3. Sensor nach Anspruch 2,
**dadurch gekennzeichnet,**
**dass** zwei Sätze von p Widerstandselementen (1) um λ/2m + jλ (wobei j eine ganze Zahl ist und wobei m ungleich n ist) gegeneinander versetzt sind, um weitere Harmonische m aus dem Signal zu filtern.

4. Sensor nach einem der Ansprüche 1 bis 3,
**dadurch gekennzeichnet,**
**dass** die Wheatstone-Brückenschaltung als Viertelbrücke konfiguriert ist.

5. Sensor nach einem der Ansprüche 1 bis 3,
**dadurch gekennzeichnet,**
**dass** die Wheatstone-Brückenschaltung als Halbbrücke konfiguriert ist.

6. Sensor nach einem der Ansprüche 1 bis 3,
**dadurch gekennzeichnet,**
**dass** die Wheatstone-Brückenschaltung als Vollbrücke konfiguriert ist.

7. Sensor nach einem der Ansprüche 1 bis 6,
**dadurch gekennzeichnet,**
**dass** zumindest eine der Widerstandsgruppen als ein Streifen (2) aus Widerstandsmaterial ausgeführt ist, wobei innerhalb des Streifens mehrere elektrische Kontakte (3) angeordnet sind, um zwei Widerstandselemente (1) gegeneinander abzugrenzen.

8. Sensor nach Anspruch 7,
**dadurch gekennzeichnet,**
**dass** zwei der Widerstandsgruppen als ein einzelner Streifen (2) aus Widerstandsmaterial ausgeführt sind.

9. Sensor nach einem der Ansprüche 1 bis 8,
**dadurch gekennzeichnet,**
**dass** die Widerstandselemente (1) Hall-Sensoren, Magnetowiderstände, resistive oder piezoresistive Dehnungsmessstreifen umfassen.

10. Verwendung eines Sensors nach einem der Ansprüche 1 bis 9 zum Messen von Winkeldaten eines rotierenden Bauteils, das ein sinusförmiges magnetisches Signal abgibt.

11. Verwendung eines Sensors nach einem der Ansprüche 1 bis 9 zum Messen von linearen Daten eines sich bewegenden Bauteils, das ein sinusförmiges magnetisches Signal abgibt.

12. Verwendung eines Sensors nach einem der Ansprüche 1 bis 9 zum Messen von periodischen mechanischen Verformungen eines Strukturkörpers.

13. Satz von zwei Sensoren nach einem der Ansprüche 1 bis 9,
**dadurch gekennzeichnet,**
**dass** die beiden Sensoren um λ/4 versetzt sind, um gleichzeitig ein sinusförmiges und ein kosinusförmiges Signal abzugeben.

14. Satz von Sensoren nach Anspruch 13,
**dadurch gekennzeichnet,**
**dass** beide Sensoren mit demselben Stromversorgungsanschluss und mit demselben Masseanschluss verbunden sind.

15. Gruppe von Sensor-Sätzen nach Anspruch 13 oder 14,
**dadurch gekennzeichnet,**
**dass** die Sätze um kλ (k ist eine ganze Zahl) gegeneinander versetzt sind, um mehr als ein unabhängiges sinusförmiges Signal und/oder kosinusförmiges Signal abzugeben zwecks Mittelwertbildung über mehr als eine Periodenlänge.

## Revendications

1. Capteur servant à mesurer un signal périodique comprenant plusieurs harmoniques sachant que le premier harmonique a une période spatiale λ, ledit capteur comprenant un circuit électrique comprenant au moins un pont de Wheatstone qui comprend au moins quatre groupes résistifs,
**caractérisé en ce**
**qu'**au moins un desdits groupes comprend au moins un ensemble de p éléments résistifs (1) branchés en série et ayant un barycentre géométrique espacé de λ/pn + iλ (i étant un nombre entier) les uns des autres afin de filtrer aux moins les harmoniques n du signal.

2. Capteur selon la revendication 1,
**caractérisé en ce**
**qu'**au moins un des groupes résistifs comprend au moins deux ensembles de p éléments résistifs (1) branchés en série.

3. Capteur selon la revendication 2,
**caractérisé en ce**
**que** deux ensembles de p éléments résistifs (1) sont décalés de λ/2m + jλ (j étant un nombre entier et m étant différent de n) les uns des autres, afin de filtrer les harmoniques m du signal.

4. Capteur selon une des revendications 1 à 3,
**caractérisé en ce**
**que** le circuit du pont de Wheatstone présente un montage en quart de pont.

5. Capteur selon une des revendications 1 à 3,
**caractérisé en ce**
**que** le circuit du pont de Wheatstone présente un montage en demi-pont.

6. Capteur selon une des revendications 1 à 3,
**caractérisé en ce**
**que** le circuit du pont de Wheatstone présente un montage en pont intégral.

7. Capteur selon une des revendications 1 à 6,
**caractérisé en ce**
**qu'**au moins un des groupes résistifs est formé dans une bande (2) de matériau résistif, plusieurs contacts électriques (3) étant disposés à l'intérieur de ladite bande afin de délimiter deux éléments résistifs (1) l'un de l'autre.

8. Capteur selon la revendication 7,
**caractérisé en ce**
**que** deux des groupes résistifs sont formés dans une seule bande (2) de matériau résistif.

9. Capteur selon une des revendications 1 à 8,
**caractérisé en ce**
**que** les éléments résistifs (2) comprennent des capteurs à effet Hall, des magnétorésistances, des extensomètres résistifs ou piézorésistifs.

10. Utilisation d'un capteur selon une des revendications 1 à 9 pour mesurer les données angulaires d'un organe en rotation délivrant un signal magnétique sinusoïdal.

11. Utilisation d'un capteur selon une des revendications 1 à 9 pour mesurer les données linéaires d'un organe mobile délivrant un signal magnétique sinusoïdal.

12. Utilisation d'un capteur selon une des revendications 1 à 9 pour mesurer les déformations mécaniques périodiques d'un corps structurel.

13. Ensemble de deux capteurs selon une des revendications 1 à 9,
**caractérisé en ce**
**que** les deux capteurs sont décalés de λ/4 afin de délivrer en parallèle un signal sinusoïdal et un signal cosinusoïdal.

14. Ensemble de capteurs selon la revendication 13,
**caractérisé en ce**
**que** les deux capteurs sont branchés au même connecteur d'alimentation électrique et au même connecteur de terre.

15. Groupe d'ensembles de capteurs selon la revendication 13 ou 14,
**caractérisé en ce**
**que** les ensembles sont décalés de kλ (k étant un nombre entier) pour délivrer plus qu'un seul signal sinusoïdal et/ou cosinusoïdal indépendant afin de pouvoir procéder à un moyennage sur plus d'une longueur de période.
